# EUROPEAN PATENT APPLICATION

(11) **EP 4 099 159 A1**
(43) Date of publication of application: **07.12.2022**
(21) Application number: 20916340.1
(22) Date of filing: 30.01.2020
(51) Int. Cl.: G06F 9/44

(54) **INPUT ASSISTANCE DEVICE, INPUT ASSISTANCE METHOD, AND INPUT ASSISTANCE PROGRAM**

(71) Applicant: FUJITSU LIMITED, Kawasaki-shi, Kanagawa 211-8588 (JP)
(72) Inventor: OMISHIMA, Senchi, Kawasaki-shi, Kanagawa 211-8588 (JP); JAYALATHGE, Chamin Hansi Ranaweera, Kawasaki-shi, Kanagawa 211-8588 (JP); FUJITA, Sokichi, Kawasaki-shi, Kanagawa 211-8588 (JP)
(74) Representative: Haseltine Lake Kempner LLP
(86) International application number: PCT/JP2020/003560
(87) International publication number: WO 2021/152803

(57) **Abstract**

An input support apparatus (101) refers to a storage unit (110) and specifies a combination of parameters corresponding to a first function included in a plurality of functions that may be provided by an API. The storage unit (110) stores, for each combination of parameters included in a parameter group extracted from specification information of the API capable of providing the plurality of functions, information indicating a correspondence relationship between the combination of parameters and the function provided by the API. The input support apparatus (101) outputs the specified combination of the parameters in association with the first function. For example, the input support apparatus (101) displays, on a display (120), the specified combination of the parameters in association with the first function so that a value of each parameter included in the combination may be input.

## Description

### FIELD

The present invention relates to an input support apparatus, an input support method, and an input support program.

### BACKGROUND

Conventionally, a new application may be created by using a Web application programming interface (API). To use the Web API, for example, a user inputs parameters appropriately.

As a prior art, there is a technology in which an input box to a parameter of a WebAPI function and a Web page input form having a check function based on an input condition to the parameter, which are defined in a definition information file, are disclosed to a user of a WebAPI library every time the definition information file is updated. Furthermore, there is a technology in which a rule file is referred to, a part not conforming to an API definition is checked for a requested item, the part and contents of a check result is registered, and the check result is output to an API designer.

### SUMMARY

### TECHNICAL PROBLEM

However, in the prior arts, it may take time and effort for a user to determine which parameter to use when the API is used.

In one aspect, the present invention aims to support input of parameters when the API is used.

### SOLUTION TO PROBLEM

In one embodiment, there is provided an input support apparatus including: a specification unit that refers to, for each combination of parameters included in a parameter group extracted from specification information of an API capable of providing a plurality of functions, a storage unit that stores information that indicates a correspondence relationship between the combination of the parameters and the function provided by the API, and specifies a combination of parameters that corresponds to a first function included in the plurality of functions; and an output control unit that outputs, in association with the first function, the combination of the parameters specified by the specification unit.

### ADVANTAGEOUS EFFECTS OF INVENTION

According to one aspect of the present invention, there is an effect that it is possible to support input of parameters when an API is used.

### BRIEF DESCRIPTION OF DRAWINGS

FIG. 1 is an explanatory diagram illustrating one example of an input support method according to an embodiment.
FIG. 2 is an explanatory diagram illustrating a system configuration example of an information processing system 200.
FIG. 3 is a block diagram illustrating a hardware configuration example of an input support apparatus 101.
FIG. 4 is a block diagram illustrating a hardware configuration example of a user terminal 201.
FIG. 5 is an explanatory diagram illustrating one example of contents stored in an API management DB 220.
FIG. 6 is an explanatory diagram illustrating a specific example of specification information of an API.
FIG. 7 is a block diagram illustrating a functional configuration example of the input support apparatus 101.
FIG. 8 is an explanatory diagram illustrating a screen example of an API selection screen.
FIG. 9 is an explanatory diagram (part 1) illustrating a screen example of a task selection screen.
FIG. 10 is an explanatory diagram (part 2) illustrating a screen example of the task selection screen.
FIG. 11 is an explanatory diagram (part 1) illustrating a screen example of an API use screen.
FIG. 12 is an explanatory diagram (part 2) illustrating a screen example of the API use screen.
FIG. 13 is a flowchart illustrating one example of an input support processing procedure of the input support apparatus 101.

### DESCRIPTION OF EMBODIMENTS

Hereinafter, an embodiment of an input support apparatus, an input support method, and an input support program according to the present invention will be described in detail with reference to the drawings.

### (Embodiment)

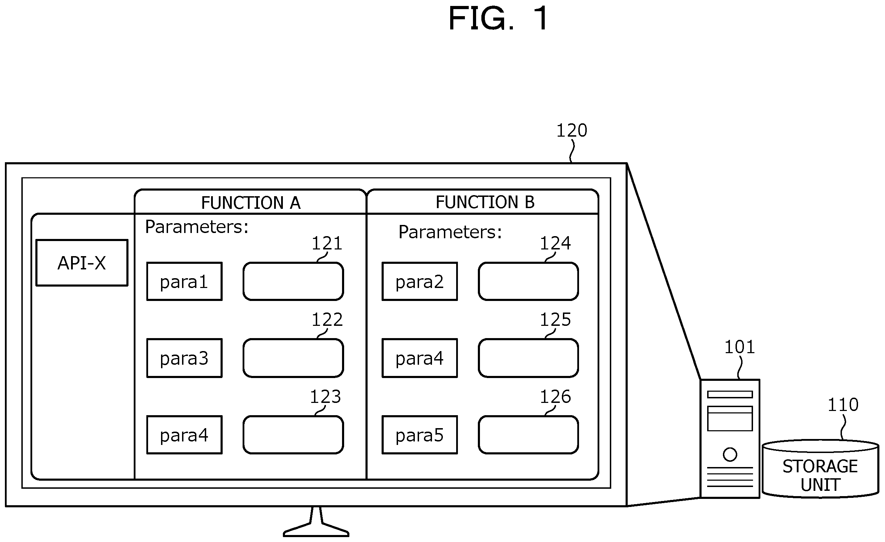

FIG. 1 is an explanatory diagram illustrating one example of the input support method according to the embodiment. In FIG. 1, an input support apparatus 101 is a computer that supports input of parameters when an API is used. The API is an interface that connects pieces of software to each other, and for example, an operating system (OS) or an application provides some of functions to another application so that the functions may be used.

Examples of the API include a Web API. The Web API is an interface between pieces of software called via a network by using a hypertext transfer protocol (HTTP). The API is implemented by, for example, a series of procedures or a collection of functions.

Here, in a case where the API is used, it is needed to input parameters appropriately. On the other hand, depending on specification of the API, the number of parameters that may be used in the API is enormous. Furthermore, there may be a plurality of functions that may be provided by the same API, and a combination of parameters to be input may be different for each function.

In other words, in order to use the API, it is needed to input an appropriate combination of parameters according to a function of the API. However, with an existing graphical user interface (GUI) for using the API, it may take time and effort for a user to determine which parameter to use from an enormous number of parameters.

For example, in the case of a business user not familiar with using the API on a daily basis, which parameter to use is determined while checking an external document or the like, and it takes a very long time to use the API. Furthermore, even a user with a high IT skill may not grasp a parameter to be input depending on the function of the API, and it may take time and effort for the user to use the API.

Thus, in the present embodiment, an input support method that supports input of parameters when the API is used by presenting an appropriate combination of parameters according to the function of the API will be described. Hereinafter, a processing example of the input support apparatus 101 will be described.
(1) The input support apparatus 101 refers to a storage unit 110 and specifies a combination of parameters corresponding to a first function included in a plurality of functions that may be provided by the API. Here, the storage unit 110 stores, for each combination of parameters included in a parameter group extracted from specification information of the API capable of providing the plurality of functions, information indicating a correspondence relationship between the combination of parameters and the functions provided by the API.

The specification information of the API is information representing the specification of the API, and for example, information regarding parameters that may be used in the API is described. The first function is any one function of the plurality of functions that may be provided by the API. The first function is, for example, specified or selected by a user.

In the example of FIG. 1, a case is assumed where, for each of functions A and B that may be provided by an API_X, a combination of parameters corresponding to each of the functions A and B is specified. Furthermore, the combination of parameters corresponding to the function A is assumed to be "a parameter 1, a parameter 3, and a parameter 4". The combination of parameters corresponding to the function B is assumed to be "a parameter 2, the parameter 4, and a parameter 5".

(2) The input support apparatus 101 outputs the specified combination of parameters in association with the first function. Specifically, for example, the input support apparatus 101 may display, on a display 120, the specified combination of parameters in association with the first function so that a value of each parameter included in the combination may be input.

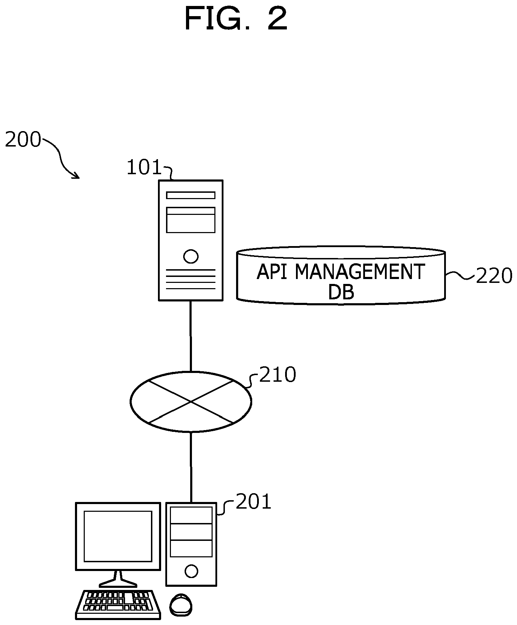

Note that the display 120 may be included in the input support apparatus 101, or may be included in a computer different from the input support apparatus 101 (for example, a user terminal 201 illustrated in FIG. 2 described later).

In the example of FIG. 1, in association with the function A provided by the API_X, the specified combination of parameters "the parameters 1, 3, and 4" is displayed on the display 120 so that values of the respective parameters 1, 3, and 4 may be input. For example, the values of the respective parameters 1, 3, and 4 may be input in respective boxes 121 to 123.

Furthermore, in association with the function B provided by the API_X, the specified combination of parameters "the parameters 2, 4, and 5" is displayed on the display 120 so that values of the respective parameters 2, 4, and 5 may be input. For example, the values of the respective parameters 2, 4, and 5 may be input in respective boxes 124 to 126.

Note that, in FIG. 1, para1 represents the parameter 1. para2 represents the parameter 2. para3 represents the parameter 3. para4 represents the parameter 4. para5 represents the parameter 5.

In this way, according to the input support apparatus 101, it is possible to present the appropriate combination of parameters according to the function of the API and support input of the parameters when the API is used. In the example of FIG. 1, a user may easily determine the parameters to be input without knowing the appropriate combination of parameters according to each of the functions A and B of the API_X.

For example, the user may easily determine that the parameters 1, 3, and 4 need to be input in order to use the function A of the API_X. Furthermore, the user may easily determine that the parameters 2, 4, and 5 need to be input in order to use the function B of the API_X.

### (System Configuration Example of Information Processing System 200)

Next, a system configuration example of an information processing system 200 including the input support apparatus 101 illustrated in FIG. 1 will be described. The information processing system 200 is applied to, for example, a computer system that provides an execution environment for the API.

FIG. 2 is an explanatory diagram illustrating the system configuration example of the information processing system 200. In FIG. 2, the information processing system 200 includes the input support apparatus 101 and the user terminal 201. In the information processing system 200, the input support apparatus 101 and the user terminal 201 are connected via a wired or wireless network 210. The network 210 is, for example, the Internet, a local area network (LAN), or a wide area network (WAN).

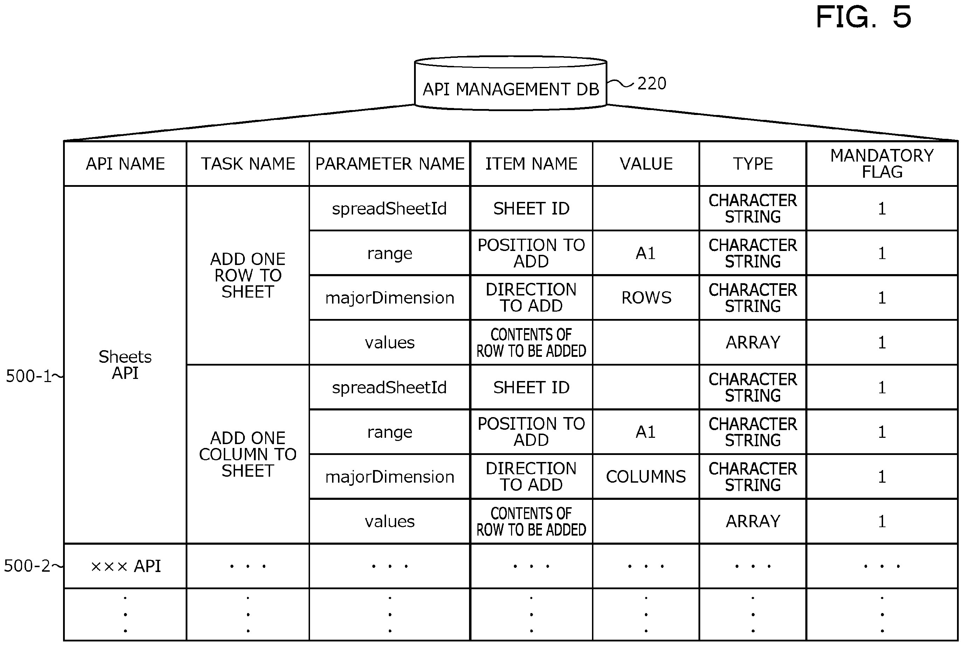

Here, the input support apparatus 101 includes an API management database (DB) 220. The API management DB 220 stores information regarding parameters that may be used in the API. The storage unit 110 illustrated in FIG. 1 corresponds to, for example, the API management DB 220. Contents stored in the API management DB 220 will be described later with reference to FIG. 5. The input support apparatus 101 is, for example, a cloud computing server.

The user terminal 201 is a computer used by a user of the information processing system 200. The user of the information processing system 200 is, for example, a person who uses APIs provided by various services and applications. The user terminal 201 is, for example, a personal computer (PC) or a tablet-type PC.

Note that, in the example of FIG. 2, the input support apparatus 101 and the user terminal 201 are separately provided. However, the present embodiment is not limited to this. For example, the input support apparatus 101 may be implemented by the user terminal 201.

### (Hardware Configuration Example of Input Support Apparatus 101)

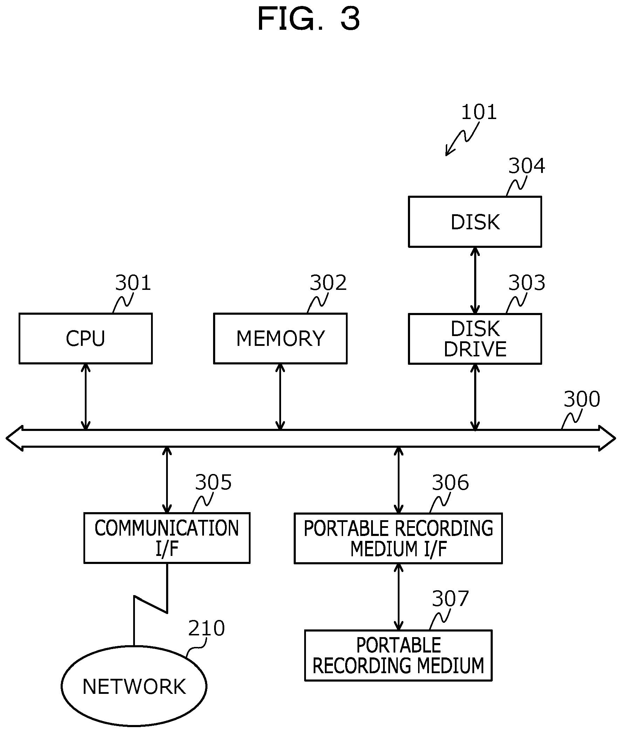

FIG. 3 is a block diagram illustrating a hardware configuration example of the input support apparatus 101. In FIG. 3, the input support apparatus 101 includes a central processing unit (CPU) 301, a memory 302, a disk drive 303, a disk 304, a communication interface (I/F) 305, a portable recording medium I/F 306, and a portable recording medium 307. Furthermore, the individual components are connected to each other by a bus 300.

Here, the CPU 301 performs overall control of the input support apparatus 101. The CPU 301 may include a plurality of cores. The memory 302 includes, for example, a read only memory (ROM), a random access memory (RAM), and a flash ROM. Specifically, for example, the flash ROM stores an operating system (OS) program, the ROM stores an application program, and the RAM is used as a work area for the CPU 301. The programs stored in the memory 302 are loaded to the CPU 301 to cause the CPU 301 to execute coded processing.

The disk drive 303 controls reading/writing of data from/to the disk 304 under the control of the CPU 301. The disk 304 stores data written under the control of the disk drive 303. Examples of the disk 304 include a magnetic disk and an optical disk.

The communication I/F 305 is connected to the network 210 through a communication line and is connected to an external computer (for example, the user terminal 201 illustrated in FIG. 2) via the network 210. Additionally, the communication I/F 305 manages an interface between the network 210 and the inside of the apparatus, and controls input and output of data from the external computer. As the communication I/F 305, for example, a modem or a LAN adapter may be employed.

The portable recording medium I/F 306 controls reading/writing of data from/to the portable recording medium 307 under the control of the CPU 301. The portable recording medium 307 stores data written under the control of the portable recording medium I/F 306. Examples of the portable recording medium 307 include a compact disc (CD)-ROM, a digital versatile disk (DVD), and a universal serial bus (USB) memory.

Note that the input support apparatus 101 may include, for example, a solid state drive (SSD), an input device, and a display in addition to the components described above. Furthermore, the input support apparatus 101 does not have to include, for example, the disk drive 303, the disk 304, the portable recording medium I/F 306, and the portable recording medium 307 among the components described above.

### (Hardware Configuration Example of User Terminal 201)

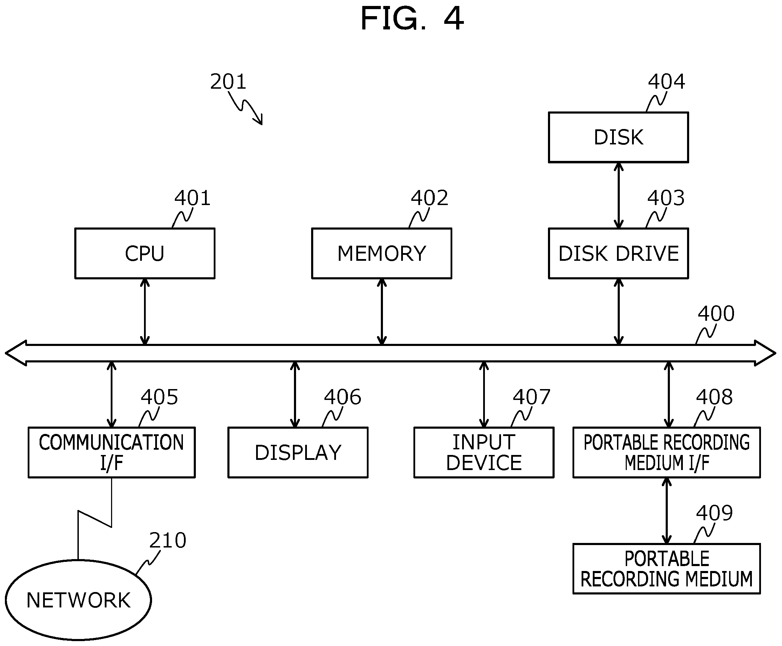

FIG. 4 is a block diagram illustrating a hardware configuration example of the user terminal 201. In FIG. 4, the user terminal 201 includes a CPU 401, a memory 402, a disk drive 403, a disk 404, a communication I/F 405, a display 406, an input device 407, a portable recording medium I/F 408, and a portable recording medium 409. Furthermore, the individual components are connected to each other via a bus 400.

Here, the CPU 401 performs overall control of the user terminal 201. The CPU 401 may include a plurality of cores. The memory 402 is a storage unit including, for example, a ROM, a RAM, and a flash ROM. Specifically, for example, the flash ROM or the ROM stores various programs, while the RAM is used as a work area for the CPU 401. The programs stored in the memory 402 are loaded to the CPU 401 to cause the CPU 401 to execute coded processing.

The disk drive 403 controls reading/writing of data from/to the disk 404 under the control of the CPU 401. The disk 404 stores data written under the control of the disk drive 403.

The communication I/F 405 is connected to the network 210 through a communication line and is connected to another computer (for example, the input support apparatus 101) via the network 210. Additionally, the communication I/F 405 manages an interface between the network 210 and the inside, and controls input and output of data from another computer.

The display 406 is a display device that displays data such as a document, an image, or function information, as well as a cursor, an icon, or a tool box. As the display 406, for example, a liquid crystal display or an organic electroluminescence (EL) display may be employed. The display 120 illustrated in FIG. 1 corresponds to, for example, the display 406.

The input device 407 includes keys to input characters, numbers, various instructions, and the like and inputs data. The input device 407 may be a keyboard, a mouse, or the like or may be a touch-panel input pad, a numeric keypad, or the like.

The portable recording medium I/F 408 controls reading/writing of data from/to the portable recording medium 409 under the control of the CPU 401. The portable recording medium 409 stores data written under the control of the portable recording medium I/F 408.

Note that the user terminal 201 does not have to include, for example, the disk drive 403, the disk 404, the portable recording medium I/F 408, or the portable recording medium 409 among the components described above.

### (Contents Stored in API Management DB 220)

Next, the contents stored in the API management DB 220 included in the input support apparatus 101 will be described with reference to FIG. 5. The API management DB 220 is implemented by, for example, a storage device such as the memory 302 or the disk 304 illustrated in FIG. 3.

FIG. 5 is an explanatory diagram illustrating one example of the contents stored in the API management DB 220. In FIG. 5, the API management DB 220 stores API management information for each API (for example, API management information 500-1 and 500-2). The API is, for example, a Web API provided by various services and applications.

Each piece of the API management information includes information regarding an API name, a task name, a parameter name, an item name, a value, a type, and a mandatory flag. The API name indicates a name of an API that may be used. The task name indicates a name of a function that may be provided by the API. The parameter name indicates a name of a parameter to be input when the function of the API is used. The item name indicates a name of an item corresponding to the parameter. As the item name, the name for easily conveying meaning of the parameter to a user is set.

The value indicates a value input in the parameter. In a case where the value is "empty", it indicates that a user needs to input the value. The type indicates a type of the parameter. Examples of the type include a character string, an array, a numerical value, and a Boolean. The mandatory flag indicates whether or not it is a mandatory parameter. A mandatory flag "1" indicates that it is a mandatory parameter (omission is not possible). A mandatory flag "0" indicates that it is not a mandatory parameter (omission is possible).

For example, the API management information 500-1 includes, for an API "Sheets API", information regarding parameters to be input when a task "Add One Row to Sheet" is used and information regarding parameters to be input when a task "Add One Column to Sheet" is used. For example, the parameters to be input when the task "Add One Row to Sheet" is used are "spreadSheetId", "range", "majorDimension", and "values". Taking the parameter "spreadSheetId" as an example, the item name is "sheet ID". The value is "empty". The type is "character string". The mandatory flag is "1".

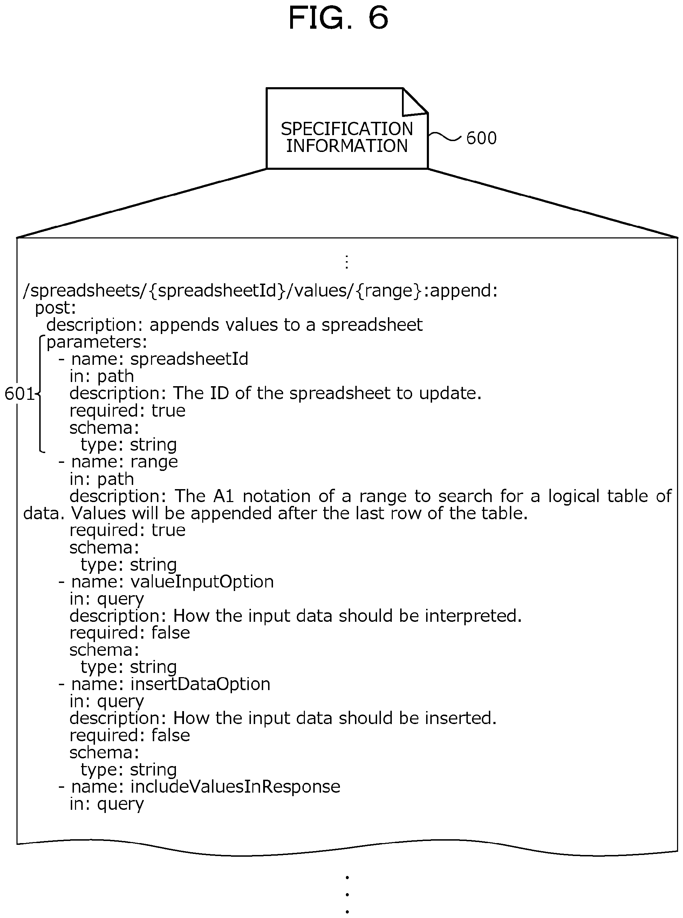

Note that the API management information is registered in the API management DB 220 by, for example, an administrator of the input support apparatus 101. In other words, the administrator of the input support apparatus 101 selects an API that may be used, and registers a function (task name) provided by the API and a combination of parameters according to the function. The information regarding the parameter name, the value, the type, and the mandatory flag of each parameter is extracted from, for example, specification information of the API. A specific example of the specification information of the API will be described later with reference to FIG. 6. The item name of each parameter is set by, for example, the administrator of the input support apparatus 101.

### (Specification Information of API)

Next, a specific example of the specification information of the API will be described with reference to FIG. 6.

FIG. 6 is an explanatory diagram illustrating the specific example of the specification information of the API. In FIG. 6, specification information 600 is information representing specification of a certain API described in an YAML format. Note that FIG. 6 excerpts and displays a part of the specification information 600.

In the specification information 600, information regarding parameters that may be used in the API (for example, a portion of a reference sign 601) is described. For example, name corresponds to a parameter name. description corresponds to description of a parameter. required indicates whether or not it is a mandatory parameter. type corresponds to a type of the parameter.

A parameter group that may be used in the API may be extracted from the specification information (for example, the specification information 600). Note that the item name of each piece of the API management information in the API management DB 220 illustrated in FIG. 5 is set with reference to, for example, the description.

### (Functional Configuration Example of Input Support Apparatus 101)

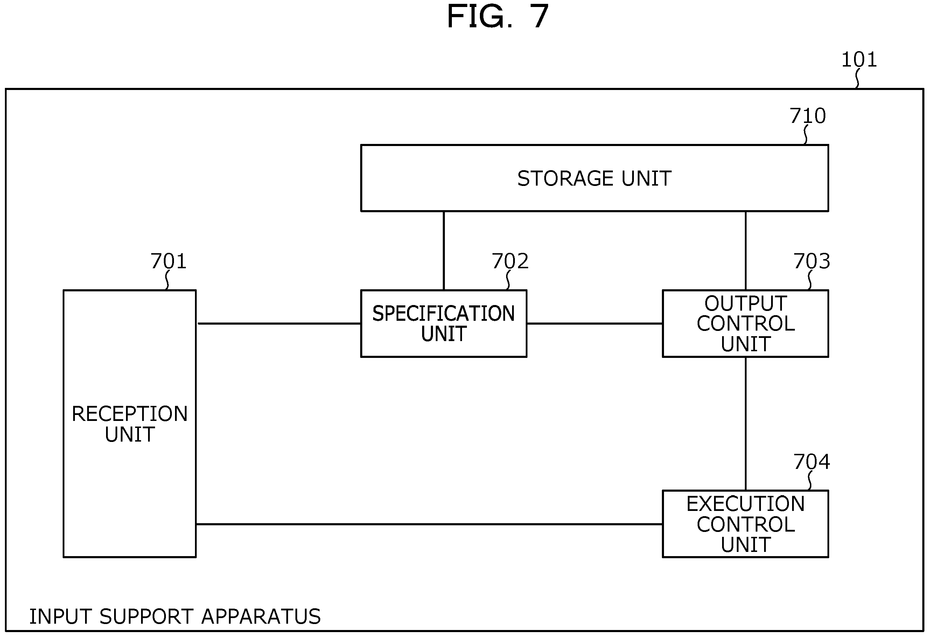

FIG. 7 is a block diagram illustrating a functional configuration example of the input support apparatus 101. In FIG. 7, the input support apparatus 101 includes a reception unit 701, a specification unit 702, an output control unit 703, an execution control unit 704, and a storage unit 710. Specifically, for example, the reception unit 701 to the execution control unit 704 implement the functions by causing the CPU 301 to execute a program stored in a storage device such as the memory 302, the disk 304, or the portable recording medium 307 illustrated in FIG. 3, or by the communication I/F 305. A processing result of each functional unit is stored in, for example, the storage device such as the memory 302 or the disk 304. Furthermore, the storage unit 710 is implemented by, for example, the storage device such as the memory 302 or the disk 304. Specifically, for example, the storage unit 710 stores the API management DB 220 illustrated in FIG. 5.

The reception unit 701 receives selection of an API. The API to be selected is, for example, an API used by a user. The selection of the API is performed on, for example, an API selection screen. The API selection screen is an operation screen that displays a plurality of APIs that may be used so that any one API may be selected from the plurality of APIs.

For example, the API selection screen is displayed on the display 406 (see FIG. 4) of the user terminal 201 by the output control unit 703 in response to a request from the user terminal 201 illustrated in FIG. 2. Furthermore, for example, the APIs that may be used are preset by the administrator of the input support apparatus 101, and are specified from the API management DB 220 illustrated in FIG. 5.

The user terminal 201 receives, on the API selection screen, selection of any one API from the plurality of APIs that may be used by operation input of a user by using the input device 407 (see FIG. 4). Then, the user terminal 201 transmits a selection result of the selected API to the input support apparatus 101. In this case, the reception unit 701 receives the selection of the API by receiving the selection result of the API from the user terminal 201.

Furthermore, the reception unit 701 may receive the selection of the API by operation input of a user by using an input device (not illustrated) of the own apparatus. Furthermore, the reception unit 701 may receive the selection of the API by receiving input of an API name by operation input of a user by using an input device (not illustrated) of the own apparatus.

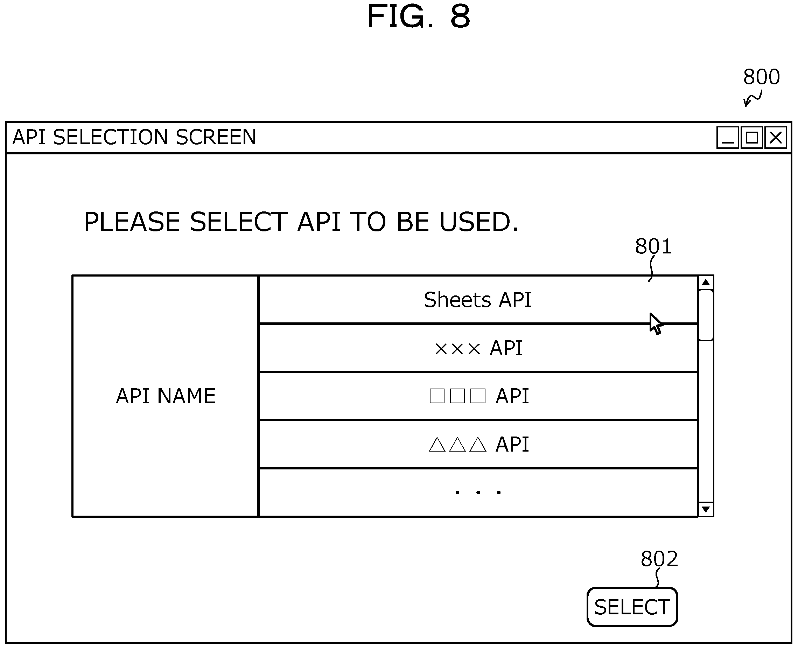

Note that a screen example of the API selection screen will be described later with reference to FIG. 8.

The reception unit 701 receives selection of a function provided by the API. The function to be selected is, for example, a function of the API used by a user. The selection of the function of the API is performed on, for example, a task selection screen. The task selection screen is an operation screen that displays a plurality of functions that may be provided by the API so that any one function may be selected from the plurality of functions.

For example, the task selection screen is displayed on the display 406 of the user terminal 201 by the output control unit 703 in response to a request from the user terminal 201. For example, the plurality of functions that may be provided by the API is preset by the administrator of the input support apparatus 101, and is specified from the API management DB 220.

The user terminal 201 receives, on the task selection screen, selection of a function from the plurality of functions that may be provided by the API by, for example, operation input of a user by using the input device 407. Then, the user terminal 201 transmits a selection result of the selected function of the API to the input support apparatus 101. The reception unit 701 receives the selection of the function provided by the API by receiving the selection result of the function of the API from the user terminal 201.

Furthermore, the reception unit 701 may receive the selection of the function of the API by operation input of a user by using an input device (not illustrated) of the own apparatus. Furthermore, the reception unit 701 may receive the selection of the function of the API by receiving input of a function name of the API by operation input of a user by using an input device (not illustrated) of the own apparatus.

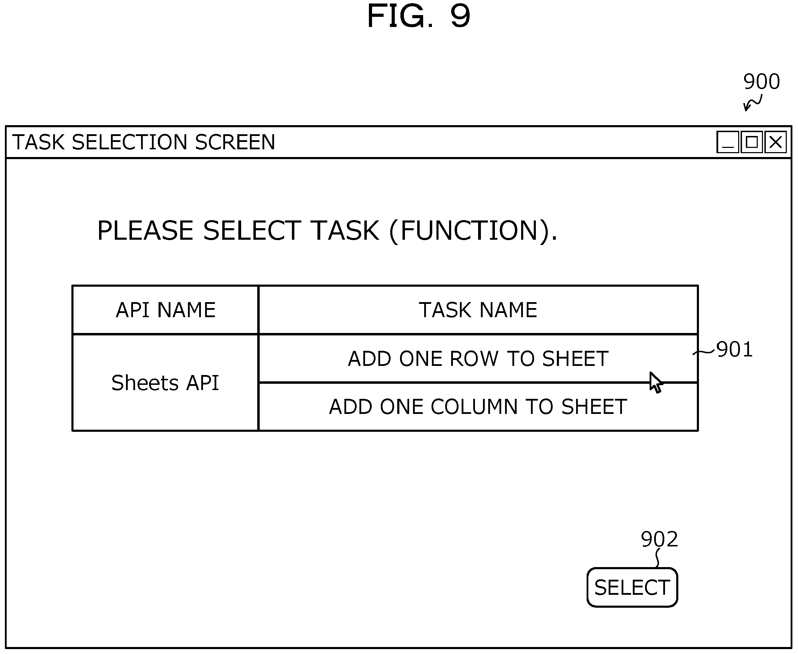

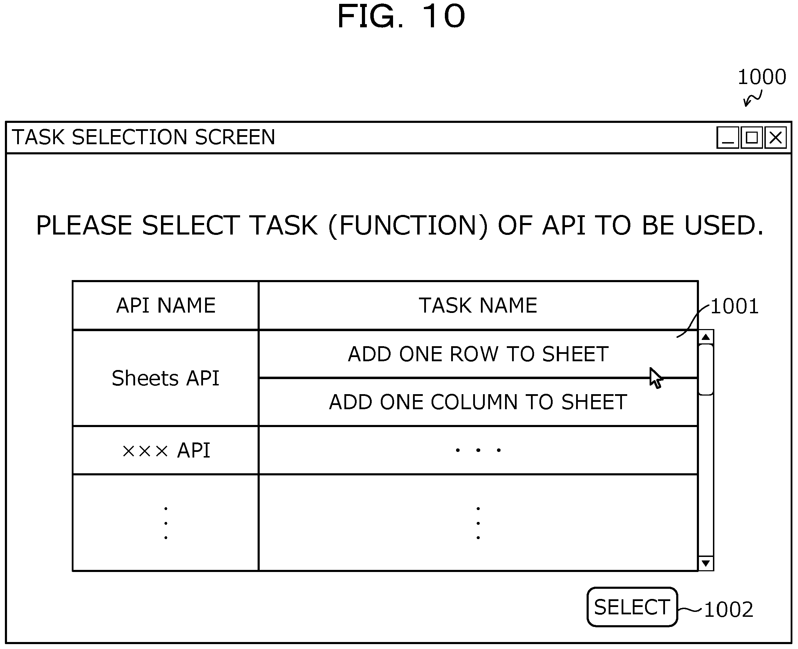

Note that a screen example of the task selection screen will be described later with reference to FIGs. 9 and 10.

In the following description, an optional API among the plurality of APIs that may be used may be referred to as "API#". Furthermore, a plurality of functions that may be provided by the API# may be referred to as "functions #1 to #n" (n: a natural number of 2 or more), and an optional function among the functions #1 to #n may be referred to as "function #i" (i = 1, 2,..., n). Note that the "first function" described above corresponds to, for example, the function #i.

The specification unit 702 refers to the storage unit 710 and specifies a combination of parameters corresponding to the function #i included in the functions #1 to #n that may be provided by the API#. Here, the storage unit 710 stores, for each combination of parameters included in a parameter group extracted from specification information of the API#, information indicating a correspondence relationship between the combination of parameters and the function #i provided by the API#.

The specification information of the API# is, for example, the specification information 600 as illustrated in FIG. 6. Note that the parameter group extraction processing from the specification information of the API# may be, for example, performed manually or may be automatically performed by the input support apparatus 101.

Specifically, for example, the specification unit 702 refers to the API management DB 220 and specifies a combination of parameters corresponding to the selected function #i of the API#. For example, it is assumed that the task "Add One Row to Sheet" of the API "Sheets API" is selected as the function #i of the API#. In this case, the specification unit 702 refers to the API management DB 220 and specifies a combination of the parameters "spreadSheetId, range, majorDimension, values" corresponding to the task "Add One Row to Sheet" of the API "Sheets API".

Furthermore, it is assumed that the task "Add One Column to Sheet" of the API "Sheets API" is selected as the function #i of the API#. In this case, the specification unit 702 refers to the API management DB 220 and specifies the combination of the parameters "spreadSheetId, range, majorDimension, values" corresponding to the task "Add One Column to Sheet" of the API "Sheets API".

Furthermore, for example, the specification unit 702 may refer to the API management DB 220, and specify, for each function #i included in the functions #1 to #n that may be provided by the API#, each combination of parameters corresponding to each function #i.

The output control unit 703 outputs the specified combination of parameters in association with the function #i of the API#. For example, the output control unit 703 may output each specified combination of parameters in association with each function #i of the API#. Examples of an output format include transmission to another computer (for example, the user terminal 201) by the communication I/F 305, and display on a display (not illustrated) of the own apparatus.

Specifically, for example, the output control unit 703 may display the specified combination of parameters in association with the function #i of the API# so that a value of each parameter included in the combination may be input. In other words, the value of each parameter may be input while the combination of parameters according to the function #i of the API# is presented.

Furthermore, the output control unit 703 may output each item name corresponding to each parameter included in the specified combination of parameters in association with the function #i of the API#. The item name corresponding to the parameter is a name for easily conveying meaning of the parameter to a user. The item name corresponding to each parameter may be specified from the API management DB 220.

Furthermore, when the specified combination of parameters is displayed in association with the function #i of the API#, the output control unit 703 may display a parameter whose value is preset in the combination in a state where the value is input. The parameter whose value is preset or the preset value may be specified from, for example, the API management DB 220.

Furthermore, when the specified combination of parameters is displayed in association with the function #i of the API#, the output control unit 703 does not have to display a parameter whose value is preset in the combination. In other words, a user may not be requested to input the parameter whose value is preset.

More specifically, for example, the output control unit 703 refers to the API management DB 220 and specifies information regarding the selected function #i (task) in API management information of the selected API#. Then, the output control unit 703 may refer to the specified information regarding the function #i (task) and display the API use screen on the user terminal 201.

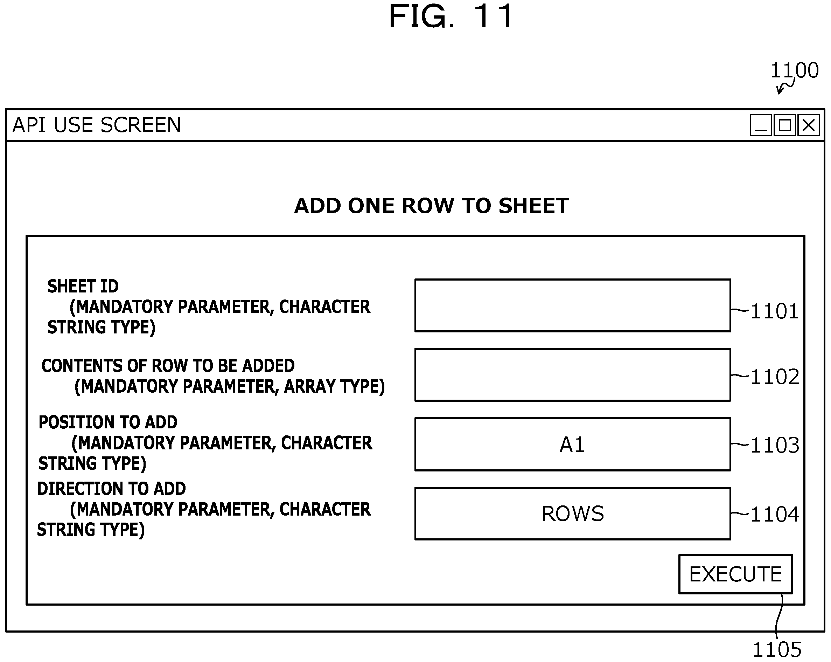

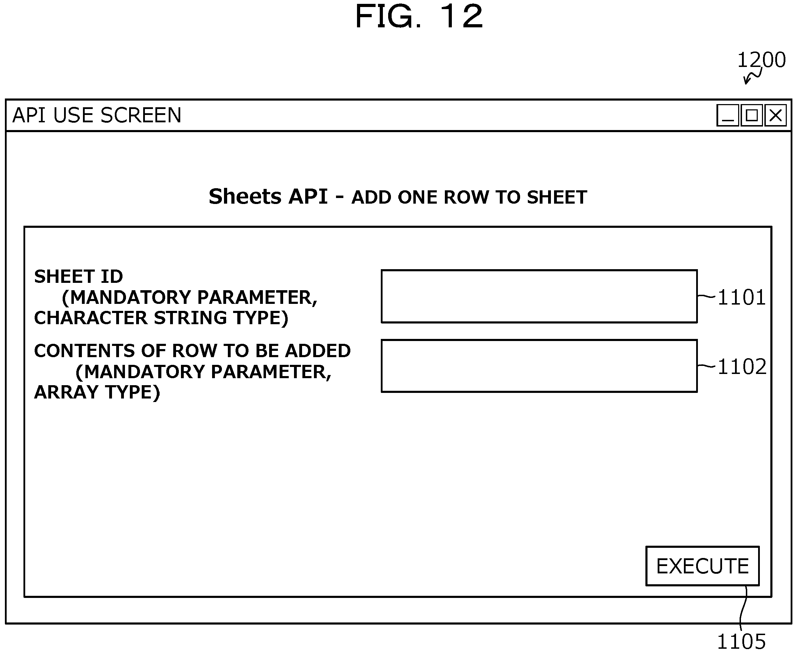

Here, the API use screen is an operation screen displayed when the API# is used, and displays the combination of parameters specified by the specification unit 702 in association with the function #i of the API# so that the value of each parameter included in the combination may be input. Note that a screen example of the API use screen will be described later with reference to FIGs. 11 and 12.

In the case of receiving input of the value of each parameter included in the combination of parameters output in association with the function #i of the API#, the execution control unit 704 executes the API# for the function #i on the basis of the input value of each parameter.

Specifically, for example, the execution control unit 704 creates an API request regarding the function #i of the API# on the basis of the input value of each parameter. The API request requests execution of the API#, and includes information that specifies the function #i of the API# and the input value of each parameter.

More specifically, for example, the API request includes an API name of the API#, a function name of the function #i, and a parameter name, a value, a type, a mandatory flag, and the like of each parameter. Then, the execution control unit 704 transmits the created API request to a web server that provides the API#. As a result, the function #i of the API# is executed on the web server on the basis of the value of each parameter.

Furthermore, the output control unit 703 outputs an execution result of the executed API#. Specifically, for example, the output control unit 703 displays the execution result of the API# on the user terminal 201 on the basis of an API response from the web server that provides the API#. The API response includes information requested by the API request, a status code, and the like. The status code indicates, for example, success or failure in the execution result indicating whether or not the execution of the API# is successful.

As the execution result of the API#, for example, the information requested by the API request and the success or failure in the execution result are displayed. With this configuration, a user may acquire desired information and perform desired processing by using the function #i of the API#. Furthermore, the user may confirm whether or not requested processing has been performed normally.

Note that each functional unit of the input support apparatus 101 described above may be implemented by, for example, the user terminal 201.

### (Screen Example of API Selection Screen)

Next, a screen example of the API selection screen will be described with reference to FIG. 8. Here, a case is assumed where the API selection screen is displayed on the display 406 of the user terminal 201.

FIG. 8 is an explanatory diagram illustrating the screen example of the API selection screen. In FIG. 8, an API selection screen 800 is one example of an operation screen that displays a plurality of APIs that may be used so that any one API may be selected from the plurality of APIs. Note that the APIs displayed on the API selection screen 800 are, for example, APIs registered in the API management DB 220.

According to the API selection screen 800, a user may confirm the plurality of APIs that may be used. Furthermore, on the API selection screen 800, an optional API may be selected from the plurality of APIs that may be used by operation input of the user by using the input device 407.

For example, on the API selection screen 800, when a selection button 802 is selected in a state where a box 801 is selected, the API "Sheets API" may be selected. In this case, a selection result indicating that the API "Sheets API" has been selected is transmitted from the user terminal 201 to the input support apparatus 101.

### (Screen Example of Task Selection Screen)

Next, screen examples of the task selection screen will be described with reference to FIGs. 9 and 10. Here, a case is assumed where the task selection screen is displayed on the display 406 of the user terminal 201.

FIG. 9 is an explanatory diagram (part 1) illustrating the screen example of the task selection screen. In FIG. 9, a task selection screen 900 is one example of an operation screen that displays a plurality of functions that may be provided by the API "Sheets API" so that any one function may be selected from the plurality of functions. The task selection screen 900 is displayed in a case where, for example, the API "Sheets API" is selected on the API selection screen 800 illustrated in FIG. 8. Note that the functions (tasks) displayed on the task selection screen 900 are, for example, functions (tasks) registered in the API management DB 220.

According to the task selection screen 900, a user may confirm a plurality of functions (tasks) that may be provided by the API "Sheets API". Furthermore, on the task selection screen 900, an optional function (task) may be selected from the plurality of functions (tasks) by operation input of the user by using the input device 407.

For example, on the task selection screen 900, when a selection button 902 is selected in a state where a box 901 is selected, the task "Add One Row to Sheet" of the API "Sheets API" may be selected. In this case, a selection result indicating that the task "Add One Row to Sheet" of the API "Sheets API" has been selected is transmitted from the user terminal 201 to the input support apparatus 101.

FIG. 10 is an explanatory diagram (part 2) illustrating the screen example of the task selection screen. In FIG. 10, a task selection screen 1000 is one example of an operation screen that displays the functions #1 to #n that may be provided by each API# so that any function #i may be selected from the functions #1 to #n.

According to the task selection screen 1000, a user may confirm the functions #1 to #n that may be provided by each API# without going through the API selection screen 800 as illustrated in FIG. 8. Furthermore, on the task selection screen 1000, an optional function (task) may be directly selected from the functions #1 to #n that may be provided by each API# by operation input of the user by using the input device 407.

For example, on the task selection screen 1000, when a selection button 1002 is selected in a state where a box 1001 is selected, the task "Add One Row to Sheet" of the API "Sheets API" may be selected. In this case, a selection result indicating that the task "Add One Row to Sheet" of the API "Sheets API" has been selected is transmitted from the user terminal 201 to the input support apparatus 101.

### (Screen Example of API Use Screen)

Next, screen examples of the API use screen will be described with reference to FIGs. 11 and 12. Here, a case is assumed where the API use screen is displayed on the display 406 of the user terminal 201.

FIG. 11 is an explanatory diagram (part 1) illustrating the screen example of the API use screen. In FIG. 11, an API use screen 1100 is one example of an operation screen displayed when the function "Add One Row to Sheet" of the API "Sheets API" is used. The API use screen 1100 is displayed in a case where, for example, the task "Add One Row to Sheet" is selected on the task selection screen 900 illustrated in FIG. 9 or the task selection screen 1000 illustrated in FIG. 10.

According to the API use screen 1100, a user may confirm what kind of parameters need to be input when the function "Add One Row to Sheet" of the API "Sheets API" is used. Furthermore, each parameter is displayed not as a parameter name used inside a computer but as an item name for easily conveying meaning of the parameter. Thus, it is easy for the user to understand what kind of information each parameter is for specifying.

Furthermore, on the API use screen 1100, information indicating whether or not each parameter is a mandatory parameter and a type of each parameter are displayed. Thus, the user may determine omission is not possible or omission is possible for which parameter. Furthermore, the user may determine which type of value needs to be input in each parameter.

More specifically, when the user uses the function "Add One Row to Sheet" of the API "Sheets API", the user may grasp that it is needed to input values of parameters corresponding to the respective item names "Sheet ID", "Contents of Row to be Added", "Position to Add", and "Direction to Add".

At this time, the user may grasp that all the parameters are mandatory parameters. Furthermore, the user may grasp that the parameters corresponding to the item names "Sheet ID", "Position to Add", and "Direction to Add" are of a character string type, and the parameter corresponding to the item name "Contents of Row to be Added" is of an array type.

On the API use screen 1100, when input boxes 1101 to 1104 are selected by operation input of the user by using the input device 407, the values of the respective parameters may be input. For example, when the input box 1101 is selected, the value of the parameter (parameter name: spreadSheetId) of the item name "sheet ID" may be input. Furthermore, when the input box 1102 is selected, the value of the parameter (parameter name: values) of the item name "Contents of Row to be Added" may be input.

On the other hand, the input box 1103 is in a state where a preset value "A1" is input for the parameter (parameter name: range) of the item name "Position to Add". Furthermore, the input box 1104 is in a state where a preset value "ROWS" is input for the parameter (parameter name: majorDimension) of the item name "Direction to Add".

Thus, the user does not need to perform input operation for the values of the parameter of the item name "Position to Add" and the parameter of the item name "Direction to Add", and a workload may be reduced. Note that the value of each parameter may be re-input by selecting the respective input boxes 1103 and 1104.

Note that the API use screen 1100 may be provided with an operation button for displaying another parameter that may be used in the API "Sheets API". With this configuration, it is possible to input a value of not only the presented parameter but also a value of still another parameter when the function "Add One Row to Sheet" of the API "Sheets API" is used.

Furthermore, on the API use screen 1100, when an execution button 1105 is selected in a state where the values are input to the respective input boxes 1101 to 1104, execution of the function "Add One Row to Sheet" of the API "Sheets API" may be started. Specifically, for example, when the execution button 1105 is selected, input results input to the respective input boxes 1101 to 1104 are transmitted from the user terminal 201 to the input support apparatus 101.

By receiving the input results from the user terminal 201, the input support apparatus 101 receives input of the values of the respective parameters according to the function "Add One Row to Sheet" of the API "Sheets API". The input support apparatus 101 creates, on the basis of the input values of the respective parameters, an API request regarding the function "Add One Row to Sheet" of the API "Sheets API", and transmits the API request to a web server that provides the API "Sheets API". As a result, the function "Add One Row to Sheet" of the API "Sheets API" is executed on the web server on the basis of the input values of the respective parameters.

FIG. 12 is an explanatory diagram (part 2) illustrating the screen example of the API use screen. In FIG. 12, an API use screen 1200 is one example of an operation screen displayed when the function "Add One Row to Sheet" of the API "Sheets API" is used. The API use screen 1200 is displayed in a case where, for example, the task "Add One Row to Sheet" is selected on the task selection screen 900 illustrated in FIG. 9 or the task selection screen 1000 illustrated in FIG. 10.

The API use screen 1200 is different from the API use screen 1100 illustrated in FIG. 11 in that the information regarding the parameter of the item name "Position to Add" and the parameter of the item name "Direction to Add" is hidden. In other words, a user is not requested to input a parameter whose value is preset.

According to the API use screen 1200, by hiding the information regarding the parameters, for which the values are preset and the user does not have to input the values by himself/herself, an amount of information to be confirmed by the user may be reduced. Note that, in a case where the function "Add One Row to Sheet" of the API "Sheets API" is executed, for the parameter (parameter name: range) of the item name "Position to Add" and the parameter (parameter name: majorDimension) of the item name "Direction to Add", the preset values "A1" and "ROWS" are used.

### (Input Support Processing Procedure of Input Support Apparatus 101)

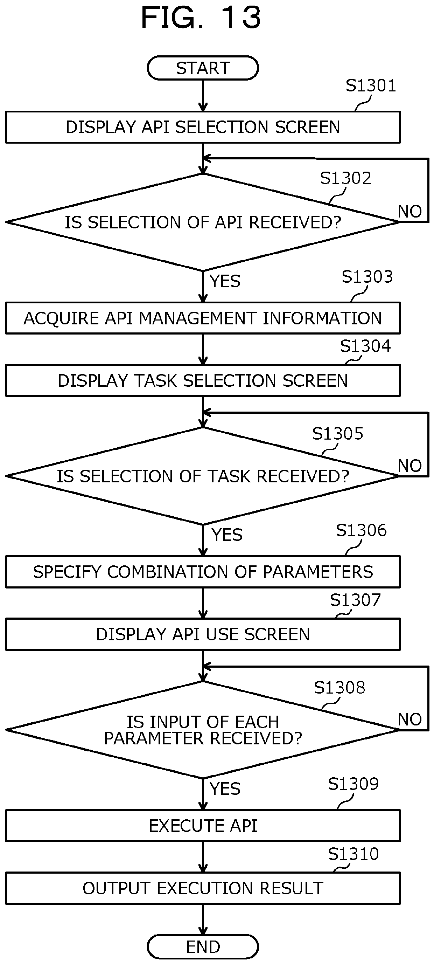

Next, an input support processing procedure of the input support apparatus 101 will be described with reference to FIG. 13.

FIG. 13 is a flowchart illustrating one example of the input support processing procedure of the input support apparatus 101. In the flowchart of FIG. 13, first, the input support apparatus 101 refers to the API management DB 220 and displays an API selection screen on the user terminal 201 (Step S1301). The API selection screen is, for example, the API selection screen 800 illustrated in FIG. 8.

Next, the input support apparatus 101 determines whether or not selection of an API# is received (Step S1302). Here, the input support apparatus 101 stands by until the selection of the API# is received (Step S1302: No). Then, in the case of receiving the selection of the API# (Step S1302: Yes), the input support apparatus 101 acquires API management information of the selected API# from the API management DB 220 (Step S1303).

Next, the input support apparatus 101 displays a task selection screen on the user terminal 201 on the basis of the acquired API management information (Step S1304). The task selection screen is, for example, the task selection screen 900 illustrated in FIG. 9. Then, the input support apparatus 101 determines whether or not selection of a task #i of the API# is received (Step S1305).

Here, the input support apparatus 101 stands by until the selection of the task #i of the API# is received (Step S1305: No). Then, in the case of receiving the selection of the task #i of the API# (Step S1305: Yes), the input support apparatus 101 refers to the acquired API management information and specifies a combination of parameters corresponding to the selected task #i of the API# (Step S1306).

Next, the input support apparatus 101 refers to the acquired API management information and displays an API use screen on the user terminal 201 (Step S1307). The API use screen is an operation screen that displays the combination of parameters specified in Step S1306 in association with the function #i of the API# so that a value of each parameter included in the combination may be input, and is, for example, the API use screen 1100 illustrated in FIG. 11.

Then, the input support apparatus 101 determines whether or not input of the value of each parameter included in the specified combination of parameters is received (Step S1308). Here, the input support apparatus 101 stands by until the input of the value of each parameter is received (Step S1308: No).

In the case of receiving the input of the value of each parameter (Step S1308: Yes), the input support apparatus 101 executes the API# for the selected function #i (task) on the basis of the input value of each parameter (Step S1309). Then, the input support apparatus 101 outputs an execution result of the API# (Step S1310), and ends the series of processing according to the present flowchart.

With this configuration, it is possible to provide a GUI that supports input of each parameter by presenting a combination of parameters that need to be input according to the function #i of the API# when the function #i of the API# is used.

As described above, according to the input support apparatus 101 according to the embodiment, it is possible to refer to the storage unit 710 (for example, the API management DB 220), and specify the combination of parameters corresponding to the function #i included in the functions #1 to #n that may be provided by the API#. The storage unit 710 stores, for each combination of parameters included in the parameter group extracted from the specification information of the API#, the information indicating the correspondence relationship between the combination of parameters and the function #i provided by the API#. The API is, for example, a Web API. Then, according to the input support apparatus 101, the specified combination of parameters may be output in association with the function #i.

With this configuration, it is possible to present the appropriate combination of parameters according to the function #i of the API# and support input of the parameters when the API# is used. For example, a user may easily determine the parameters to be input without knowing the combination of different parameters according to application (function #i) of the API#.

Furthermore, according to the input support apparatus 101, it is possible to display the functions #1 to #n that may be provided by the API# so that any one function #i may be selected from the functions #1 to #n, and in response to the selection of the function #i from the displayed functions #1 to #n, refer to the storage unit 710 and specify the combination of parameters corresponding to the function #i.

With this configuration, it is possible to present the functions #1 to #n that may be provided by the API# so that a user may select the function #i that the user wishes to use, and present the appropriate combination of parameters according to the selected function #i.

Furthermore, according to the input support apparatus 101, it is possible to display the specified combination of parameters in association with the function #i so that the value of each parameter included in the combination may be input.

With this configuration, it is possible to provide a GUI in which the value of each parameter may be input while presenting the appropriate combination of parameters according to the function #i of the API#.

Furthermore, according to the input support apparatus 101, it is possible to display each item name corresponding to each parameter included in the specified combination of parameters in association with the function #i.

With this configuration, it is possible to make it easy for a user to understand what kind of information each parameter is for specifying when the appropriate combination of parameters corresponding to the function #i of the API# is presented.

Furthermore, according to the input support apparatus 101, when the specified combination of parameters is displayed in association with the function #i, it is possible to display the parameter whose value is preset in the combination in the state where the value is input.

With this configuration, it is possible to omit input operation by a user for the parameter whose value is preset among the parameters that need to be input according to the function #i of the API#, and reduce the workload.

Furthermore, according to the input support apparatus 101, when the specified combination of parameters is displayed in association with the function #i, it is possible not to display the parameter whose value is preset in the combination.

With this configuration, by hiding the information regarding the parameter for which a user does not have to input the value by himself/herself among the parameters that need to be input according to the function #i of the API#, it is possible to reduce the amount of information to be confirmed by the user when the API# is used.

Furthermore, according to the input support apparatus 101, in a case where input of the value of each parameter included in the output combination of parameters is received, it is possible to execute the API# for the function #i on the basis of the input value of each parameter.

With this configuration, it is possible to execute, by using the API#, processing intended by a user.

From these facts, according to the input support apparatus 101 and the information processing system 200 according to the embodiment, it is possible to provide a service (execution environment) that makes it easy for a wide range of users to use an API by supporting input of parameters when the API is used. For example, even a business user who is not familiar with using the API on a daily basis may easily determine which parameter to use without checking an external document or the like, and may reduce a work time and a workload when using the API. Furthermore, even a user with a high IT skill may reduce a work time and a workload when using the API, which may lead to improvement in productivity.

Note that the input support method described in the present embodiment may be implemented by executing a program prepared in advance on a computer such as a personal computer or a workstation. The present input support program is recorded on a computer-readable recording medium such as a hard disk, a flexible disk, a CD-ROM, a DVD, or a USB memory, and is read from the recording medium to be executed by the computer. Furthermore, the present input support program may be distributed via a network such as the Internet.

Furthermore, the input support apparatus 101 described in the present embodiment may also be implemented by a special-purpose IC such as a standard cell or a structured application specific integrated circuit (ASIC) or a programmable logic device (PLD) such as an FPGA.

### CITATION LIST

### PATENT DOCUMENT

Patent Document 1: Japanese Laid-open Patent Publication No. 2012-73778
Patent Document 2: Japanese Laid-open Patent Publication No. 2018-142271

### REFERENCE SIGNS LIST

101Input support apparatus
110, 710Storage unit
120, 406Display
200Information processing system
201User terminal
210Network
220API management DB
300, 400Bus
301,401CPU
302, 402Memory
303, 403Disk drive
304,404Disk
305, 405Communication I/F
306, 408Portable recording medium I/F
307, 409Portable recording medium
407Input device
600Specification information
701Reception unit
702Specification unit
703Output control unit
704Execution control unit
800API selection screen
900, 1000Task selection screen
1100, 1200API use screen

## Claims

1. An input support apparatus comprising:
a specification unit that refers to, for each combination of parameters included in a parameter group extracted from specification information of an application programming interface (API) capable of providing a plurality of functions, a storage unit that stores information that indicates a correspondence relationship between the combination of the parameters and the function provided by the API, and specifies a combination of parameters that corresponds to a first function included in the plurality of functions; and
an output control unit that outputs, in association with the first function, the combination of the parameters specified by the specification unit.

2. The input support apparatus according to claim 1, wherein
the output control unit displays the plurality of functions providable by the API such that any one function is selectable from the plurality of functions, and
the specification unit refers to the storage unit in response to the selection of the first function from the displayed plurality of functions and specifies the combination of the parameters that corresponds to the first function.

3. The input support apparatus according to claim 1, wherein the output control unit displays the specified combination of the parameters in association with the first function such that it is possible to input a value of each parameter included in the combination.

4. The input support apparatus according to claim 3, wherein the output control unit displays each item name that corresponds to each parameter included in the specified combination of the parameters in association with the first function.

5. The input support apparatus according to claim 1, further comprising an execution control unit that executes, in a case where input of a value of each parameter included in the combination of the parameters output by the output control unit is received, the API for the first function on the basis of the input value of each parameter.

6. The input support apparatus according to claim 3, wherein
the output control unit
displays, when the specified combination of the parameters is displayed in association with the first function, a parameter whose value is preset in the combination in a state where the value is input.

7. The input support apparatus according to claim 3, wherein
the output control unit
does not display, when the specified combination of the parameters is displayed in association with the first function, a parameter whose value is preset in the combination.

8. The input support apparatus according to claim 1, wherein the API is a Web API.

9. A computer-implemented method of input support, the method comprising:
referring a memory configured to store, for each combination of parameters included in a parameter group extracted from specification information of an application programming interface (API) capable of providing a plurality of functions, information that indicates a correspondence relationship between the combination of the parameters and the function provided by the API;
specifying a combination of parameters that corresponds to a first function included in the plurality of functions; and
outputting, in association with the first function, the combination of the parameters specified by the specifying.

10. An input support program comprising instructions which, when executed by a computer, cause the computer to cause perform processing, the processing comprising:
referring a memory configured to store, for each combination of parameters included in a parameter group extracted from specification information of an application programming interface (API) capable of providing a plurality of functions, information that indicates a correspondence relationship between the combination of the parameters and the function provided by the API;
specifying a combination of parameters that corresponds to a first function included in the plurality of functions; and
outputting, in association with the first function, the combination of the parameters specified by the specifying.
